# EUROPEAN PATENT SPECIFICATION

(11) **EP 0 879 458 B1**
(45) Date of publication and mention of the grant of the patent: **17.09.2003**
(21) Application number: 96937128.5
(22) Date of filing: 08.11.1996
(51) Int. Cl.: G08G 1/0967, G01S 5/10

(54) **A METHOD OF TRIGGERING AN EVENT**
VERFAHREN ZUR AUSLÖSUNG EINES EREIGNISSES
PROCEDE DE DECLENCHEMENT D'UN EVENEMENT

(30) Priority: 09.11.1995 AU PN647695
(43) Date of publication of application: 25.11.1998
(73) Proprietor: QX Corporation Pty Ltd, Ginninderra Heights, ACT 2617 (AU)
(72) Inventor: SMALL, David, Ginninderra Heights, ACT 2617 (AU)
(74) Representative: Wagner, Wolfgang, Dr. Phil., Dipl.-Phys.
(86) International application number: PCT/AU96/00712
(87) International publication number: WO 97/017685

(56) References cited:
- EP-A- 0 511 447
- EP-A- 0 588 086
- EP-A- 0 672 890
- EP-A- 0 681 278
- WO-A-91/14247
- WO-A-95/18432
- WO-A-96/04633

## Description

### TECHNICAL FIELD

This invention relates to a method of triggering an event in a mobile apparatus based on the calculated distance of the mobile apparatus from a predetermined point of interest (POI).

This invention has particular but not exclusive application to the triggering of audio and/or visual systems in public transport vehicles such as planes, buses, trains and ferries. The system also has particular application in rental or private vehicles or could be carried by pedestrians. The system can also be used for fleet management.

### BACKGROUND ART

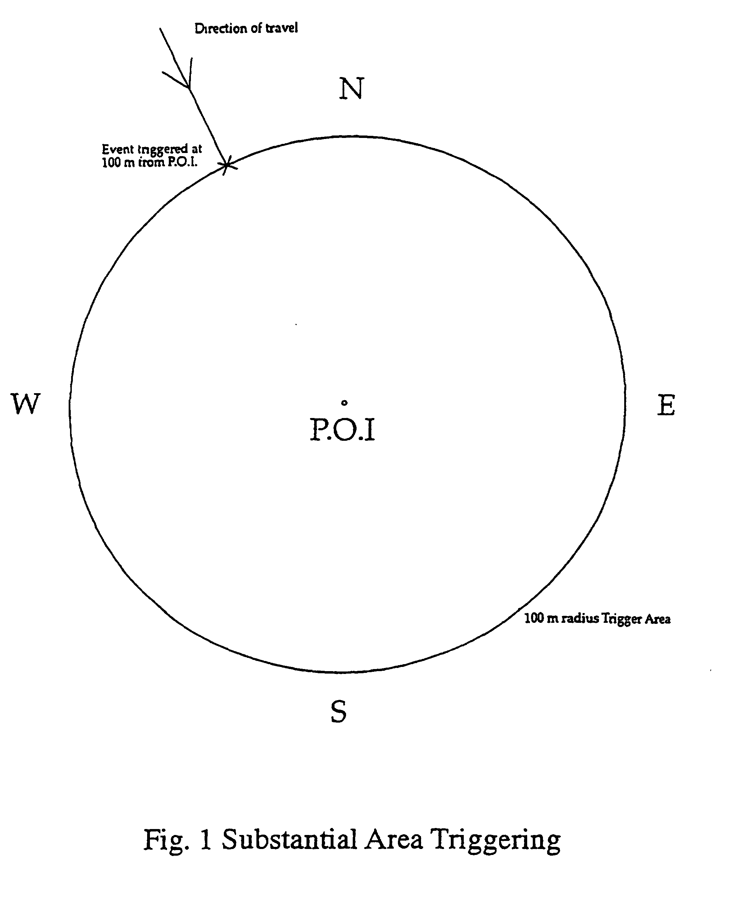

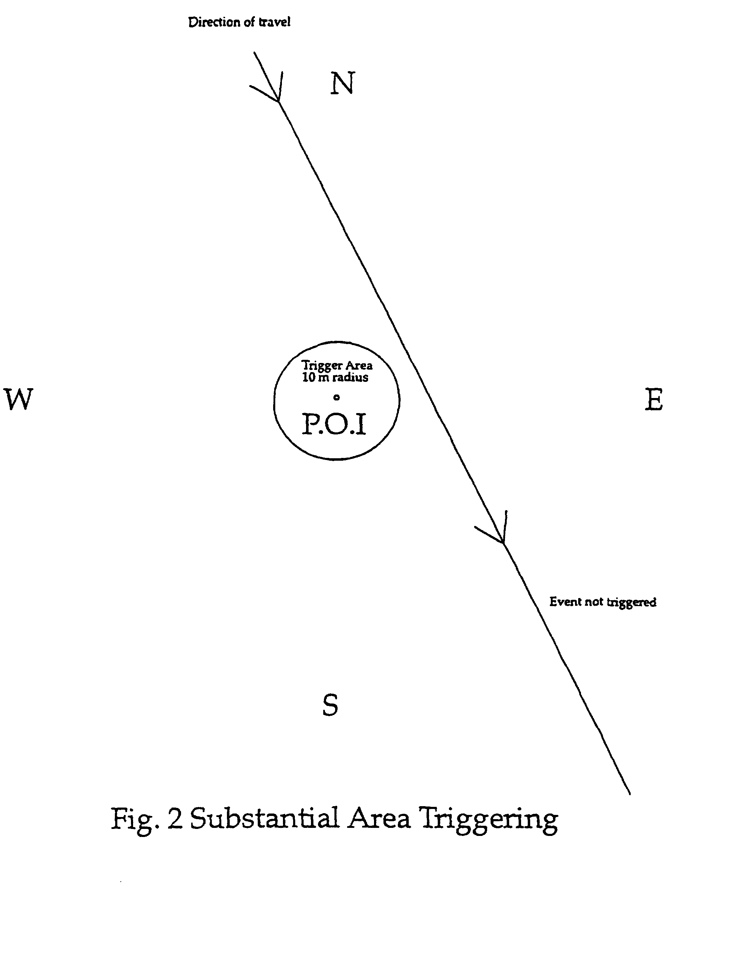

A system using Global Positioning Satellites (GPS) is disclosed in European Patent Application 91310888.2 (Publication No. 0 511 447) in the name of Pioneer Electronic Corporation. In this system the location of an automobile is tracked by GPS and when the automobile enters a pre-determined area an event is triggered. Specifically, a particular piece of music is played and locality specific information such as service facilities may be provided visually or audibly. This type of triggering is herein referred to as "substantial area triggering" and is illustrated in FIGS 1 and 2.

EP-A- 0 588 086 discloses a method of triggering an event in a vehicle-mounted apparatus and also the corresponding apparatus. The method includes the steps of calculating the position of the apparatus, calculating the distance between the calculated position and a predetermined point, triggering a series of events when the calculated distance is not more than a first predetermined distance and triggering further events at further distances. The disclosed apparatus also comprises means for judging whether a predetermined point has been passed by the vehicle.

### DISCLOSURE OF THE INVENTION

The invention is defined by independent method claims 1 and 4 and by corresponding independent apparatus claims 7 and 10. Preferred realisations of the invention are claimed in the dependent claims.

In the preferred embodiment the apparatus includes a hand-held or vehicle mounted audio and/or visual system and the event is the playing of an audio and/or visual file. However, the event may be anything else such as the dimming of lights, the turning on of a "Fasten Seat Belts" sign, or the transmission of positional or other data back to base.

### BRIEF DESCRIPTION OF THE FIGURES

In order that this invention may be more easily understood and put into practical effect, reference will now be made to the accompanying FIGS in which:-
FIG 1 is a schematic view of substantial area triggering according to the prior art;
FIG 2 is a schematic view of substantial area triggering according to the prior art;
FIG 3 is a schematic view of triggering according to the present invention without a triggering area;
FIG 4 is a schematic view of triggering according to the present invention showing also variant whith a triggering area which is not in accordance with the invention;
FIG 5 is a schematic view of triggering according to the present invention with a direction sub-trigger showing also a variant with a triggering area which is not in accordance with the invention;
FIG 6 is a schematic view of triggering according to the present invention with a direction sub-trigger and an altitude sub-trigger showing also a variant with a triggering area which is not in accordance with the invention;
FIG 7 is a schematic view of triggering according to the present invention with a step ratio; the triggering area shown being not in accordance with the invention
FIG 8 is a schematic view of triggering which is not accordance with the invention with a triggering area and a plurality of direction sub-triggers known as sector sub-triggers;

### BEST MODE

GPS positional information wanders due to several reasons. The US Department of Defense intentionally adds errors to the system to decrease accuracy for non-US military users. This means that whilst a GPS receiver is stationary its calculated position can wander up to 100 metres from its true position. Other errors can occur due to such things as ionospheric and tropospheric delays, and multi-pathing.

Differential GPS (DGPS) was devised to counter these errors, making accuracies of about 1 metre possible. DGPS is essentially a Radio Frequency (RF) modem that communicates directly with the GPS to correct the errors mentioned above. However, DGPS is only available in selected areas of the world, these mainly being major cities and surrounding areas.

The system disclosed in European Patent Application 91310888.2 (Publication No. 0 511 447) in the name of Pioneer Electronic Corporation triggers an event when the calculated position of the vehicle is within a predetermined triggering area (see FIGS 1 and 2). This is referred to as "substantial area triggering".

For a vehicle based GPS receiver which may reasonably be travelling at any speed between 10 to 100 km/hr, a practical predetermined triggering distance from the POI may be 100m to ensure that the event is not triggered after the POI has already been passed or too long before the POI is reached. This means that a circular trigger area having a radius of 100m is defined about the POI as illustrated in FIG 1.

In areas where DGPS is not available the boundary of the circular trigger area may drift up to 100m. Thus, in a worst case scenario the event may be triggered when the true position of the GPS receiver is 200m from the POI or 0m from the POI.

If the triggering area is reduced to a 10m radius as shown in FIG 2 then the event may not be triggered at all as the apparatus may fail to enter the smaller triggering area which of course will also drift.

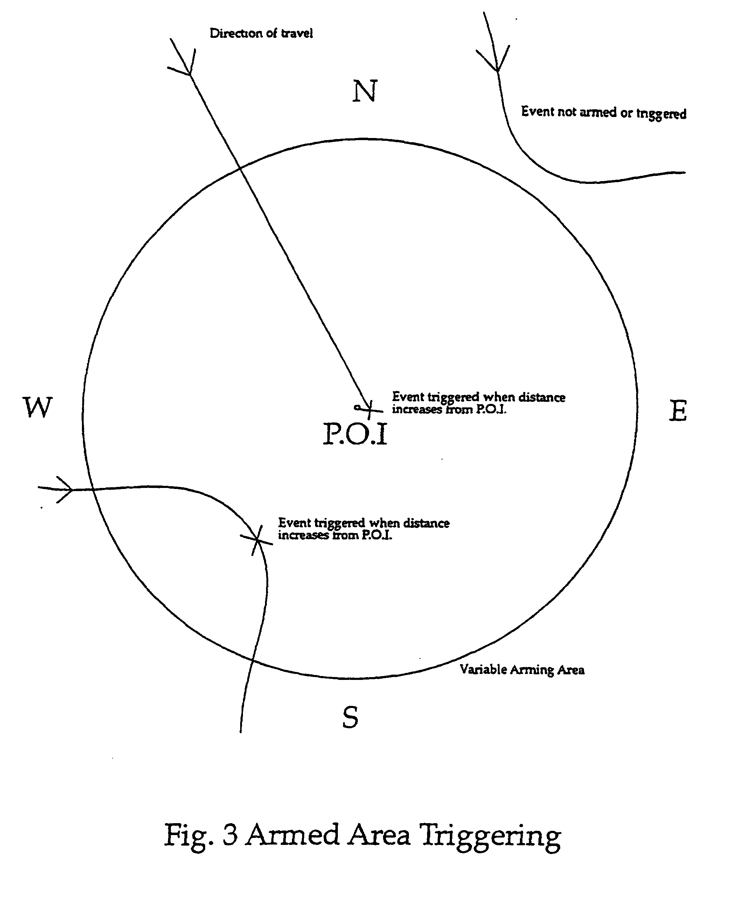

Referring now to FIG 3 there is illustrated an example of armed area triggering according to the present invention. In this case the event is triggered when the calculated distance from the POI increases after the apparatus has entered the arming area. This type of triggering is particularly useful in situations where the route being followed by the apparatus is not always consistent. For example, if the apparatus is installed in a ferry and circumstances dictate that the ferry must turn away from the POI before reaching the POI then the event will be triggered immediately after the point of closest approach.

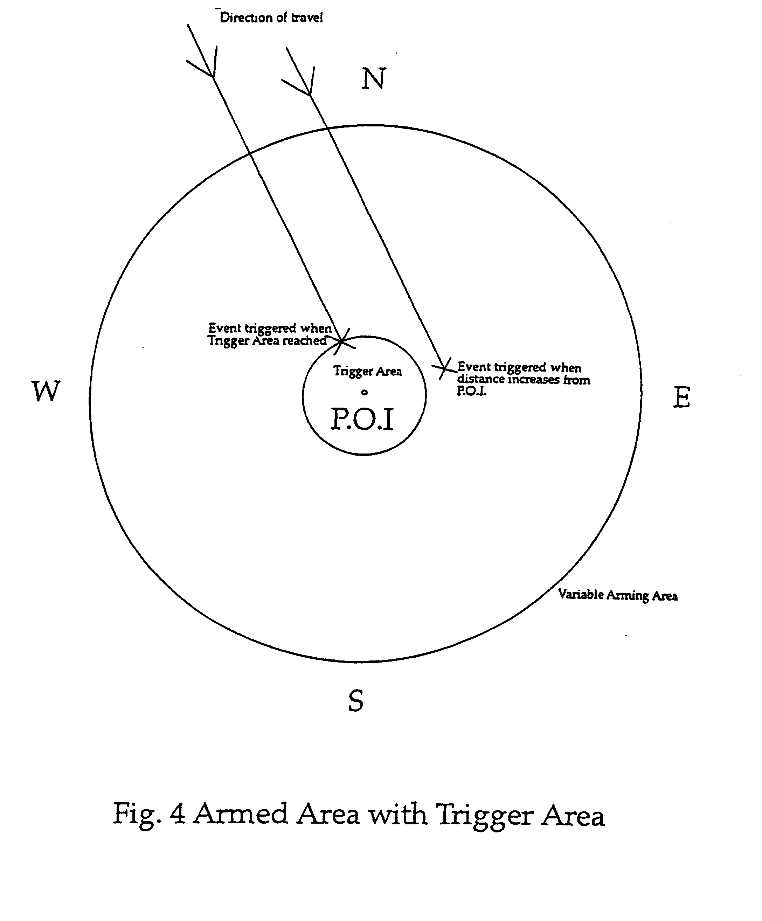

Referring now to FIG 4 there is illustrated an example of a triggering system having both an arming area and a triggering area. In this case the event is triggered if the calculated distance from the POI increases whilst within the armed area or if the apparatus enters the triggering area.

In another embodiment there is no triggering area and the event is triggered when the apparatus exits the arming area. This may be utilised for example when a ferry leaves its wharf and the exact wharf from which it leaves and the direction in which it leaves from the wharf is variable. In this case the wharf area will be the arming area and the event will be triggered on exit.

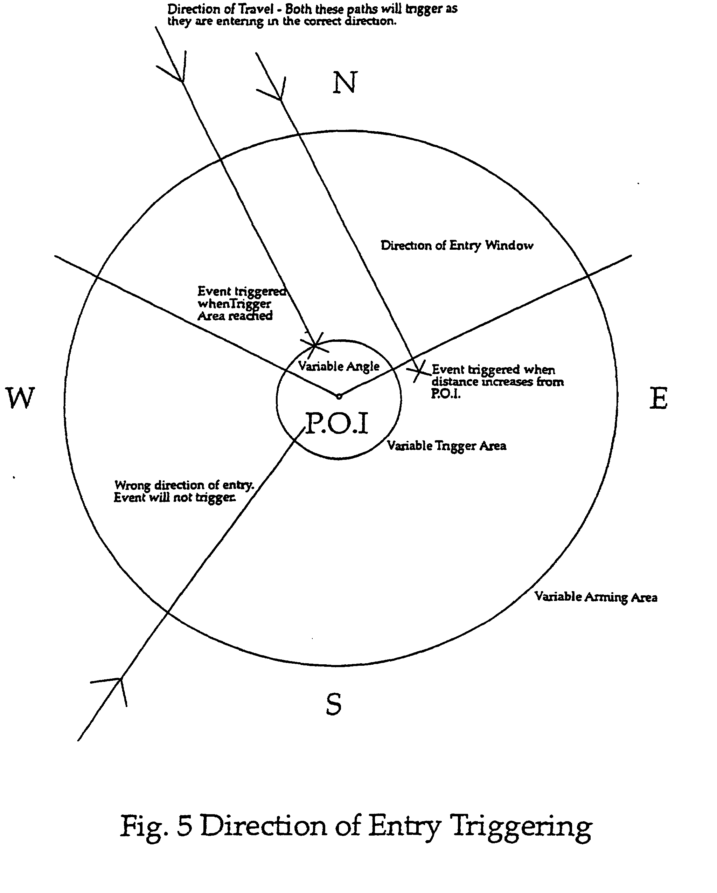

Referring to FIG 5, direction of approach can be used as a sub-trigger. In this regard the event will only be triggered if the apparatus approaches from a predetermined direction or range of directions. This is particularly useful when a fixed route closely passes a POI multiple times during a tour.

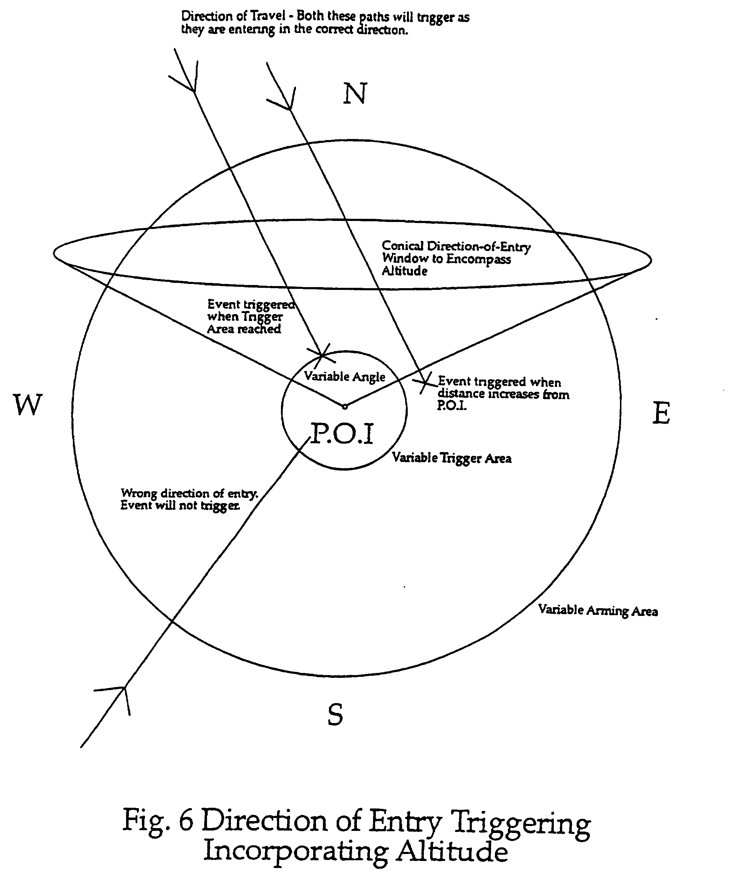

Referring to FIG 6, an altitude sub-trigger has utility when the apparatus is mounted in a plane or the like. For example, it would be undesirable for "You are landing at Sydney Airport" to be played when you are, in fact, in a holding pattern above Sydney Airport. Other sub-triggers based on time, date, velocity or other parameters may be used such that the event is only triggered when these parameters are satisfied.

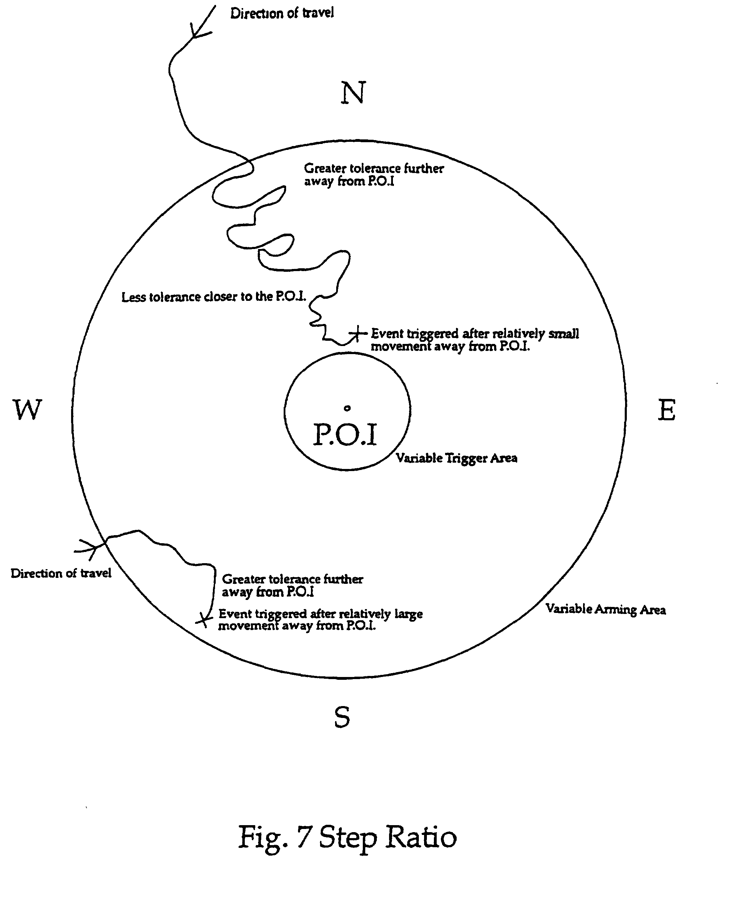

Referring to FIG 7, there is illustrated a system in which a so-called "step ratio" is applied. In this system the event is not triggered immediately when the calculated distance increases as this increase may be due to GPS positional data wandering or due to the wandering of the apparatus itself. Accordingly the system hesitates before triggering the event. The event only triggers when the distance increases by an amount in excess of a tolerance amount. This tolerance amount is proportional to the calculated distance, ie. the tolerance is smaller when the calculated distance is smaller.

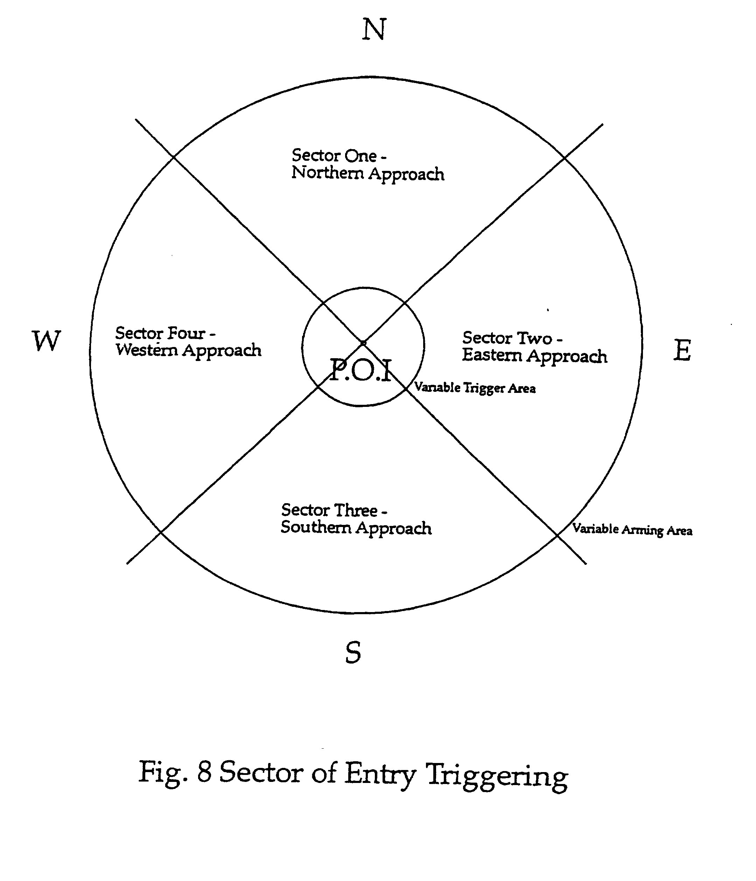

In FIG 8 there is illustrated an example of sector triggering which is not in accordance with the invention. In this case the approaches to the POI are divided into four 90 degree sectors although any number of variable size sectors could be used. Accordingly, if a pedestrian approaches from the northern sector then they would receive a message "On your right you will see...", if they approached from the south they would hear "On your left you will see....", and if they approached from the east they would hear "Directly ahead of you ....".

In the preferred embodiment of the present invention the apparatus includes a mobile audio/visual system which is installed in a ferry, bus or train to provide information regarding, for example, points of interest, location of next stop, time of arrival etc. The system can also be used to send location, average speed etc data back to a central base. The invention therefore also provides an effective fleet management tool.

The ferry, bus or train usually follows an established route. At certain points along the route it is desirable that audio/visual announcements be made, eg "On your right you will see...", or "This train is now arriving at Central" etc. The system ensures that such announcements are made at the correct location without making any demands on the driver. The driver would, of course, be able to override the system or add further comments as necessary. The system may include a countdown timer or distance measurement which indicates to the driver when the next location triggered announcement will be made. Accordingly, the driver can add his or her comments without interrupting the next location triggered announcement.

Desirably, each file includes the relevant announcement followed by continuous filler music. When the subsequent location is reached the filler music is automatically faded and the next announcement made.

In some situations it is desirable to "wait then play". For example, it may be desirable that a particular file be played at a location where there is no GPS reception, eg. in a tunnel. In this circumstance the file may be triggered as the vehicle enters the tunnel, however there may be a 30 second delay between triggering and playing.

It is also preferable that the system flag any files which have been played so that they can only be played once.

The announcements are pre-recorded to audio/visual files and the POI at which they should be played is noted. This information together with route data is stored. Of course, the system is also compatible with non-fixed routes.

The audio/visual system includes a differential global positioning system which determines the audio/visual system's position.

The system also has provision for loss of satellite reception. In circumstances where the GPS fails, the approximate position of the system will be estimated using one or more of time measuring means, distance measuring means and route data. A bus, for example, may include a tachometer which counts wheel revolutions since reception was lost and hence enables the calculation of a distance. This distance added onto the last GPS position along a predetermined route will give a good estimate of present position.

Each individual on a tour may have a personal audio/visual system and the audio/visual files may be in a number of languages. A person on a tour may select their preferred language. Similarly, the files may also be in a number of personalities or have different presenters to suit different tastes.

The system could also be used to ensure that entertainment such as movies are played at the correct position en-route.

The system includes a clock or sources time and date information from the satellite such that time specific announcements can be made, eg 15 minutes out of Canberra the announcement might be "We will be arriving in Canberra at (present time plus 15 minutes)". Similarly, the system may include other date, time, day, weather specific information. For example, an announcement may be "Good Morning (time), and welcome to Canberra on the chilly (weather) winter's (date) day". Equally, certain files relating to tourist attractions which are closed on certain days can be suppressed on those days. The system may also include velocity specific announcements, eg. "You are travelling at 90km/hr and you are reminded that the speed limit at this location is 80km/hr".

The files may be stored in any suitable medium and may be periodically updated, for example by RF link. Thus, files including news or current affairs can be regularly updated and other program material can be updated as required.

In the present system, the audio/visual files are stored on CD ROM from which the data is fed to a RAM buffer at a rate greater than the required output rate. This gives the system the opportunity to correct any errors caused by skipping of the CD ROM. Data is output from the RAM buffer to an digital-to-analogue converter.

As mentioned previously the system can be used as a fleet management tool. For example, specified locations having good mobile phone reception may be selected at which a bus or truck in transit may report via modem back to base with information such as position, average velocity, fuel consumption, etc. This avoids the need for the base to poll the vehicle which may be out of communication at the time that it is polled.

It will of course be realised that whilst the above has been given by way of an illustrative example of this invention, all such and other modifications and variations hereto, as would be apparent to persons skilled in the art, are deemed to fall within the scope of this invention which is defined in the claims.

## Claims

1. A method of triggering an event in an apparatus which is vehicle-mounted or can be carried by pedestrians, the method including:
calculating the position of the apparatus;
calculating the distance between the calculated position and a predetermined point;
arming the apparatus when the calculated distance is not more than a predetermined arming distance; and
triggering the event in the armed apparatus when the calculated distance increases.

2. A method as claimed in claim 1, wherein the calculated distance may increase a limited amount without triggering the event.

3. A method as claimed in claim 2, wherein the limited amount is proportional to the calculated distance.

4. A method of triggering an event in an apparatus which is vehicle-mounted or can be carried by pedestrians, the method including:
calculating the position of the apparatus;
calculating the distance between the calculated position and a predetermined point;
arming the apparatus when the calculated distance is not more than a predetermined arming distance;
triggering the event in the armed apparatus when the calculated distance increases and at the same time the calculated distance is not less than the arming distance.

5. A method of triggering an event as claimed in one of claims 1 to 4, wherein the method further comprises determining the value of a variable parameter and triggering the event only if the value of the parameter matches a predetermined value or range of values.

6. A method of triggering an event as claimed in claim 5, wherein the variable parameter is date, day, time, altitude, weather or direction of travel or velocity of the apparatus.

7. An apparatus which is vehicle-mounted or can be carried by pedestrians, for triggering an event, the apparatus including:
means for calculating the position of the apparatus;
means for calculating the distance between the calculated position and a predetermined point;
means for arming the apparatus when the calculated distance is not more than a predetermined arming distance; and
means for triggering the event in the armed apparatus when the calculated distance increases.

8. Apparatus according to claim 7, wherein the calculated distance may increase a limited amount without triggering the event.

9. Apparatus according to claim 8, wherein the limited amount is proportional to the calculated distance.

10. An apparatus which is vehicle-mounted or can be carried by pedestrians, for triggering an event, the apparatus including:
means for calculating the position of the apparatus;
means for calculating the distance between the calculated position and a predetermined point;
means for arming the apparatus when the calculated distance is not more than a predetermined arming distance; and
means for triggering the event when the calculated distance increases and at the same time the calculated distance is not less than the arming distance.

11. Apparatus according to one of claims 7 to 10, further including:
means for determining the value of a variable parameter and for triggering the event only if the value of the parameter matches a predetermined value or range of values.

12. Apparatus according to claim 11, wherein the variable parameter is date, day, time, altitude, weather or direction of travel or velocity of the apparatus.

## Patentansprüche

1. Verfahren zur Auslösung eines Ereignisses in einer Vorrichtung, die an einem Fahrzeug angebracht ist oder von Fussgängern mitgeführt werden kann, umfassend:
Berechnen der Position der Vorrichtung;
Berechnen der Entfernung zwischen der berechneten Position und einem vorgegebenen Punkt;
Aktivieren der Vorrichtung, wenn die berechnete Entfernung nicht grösser als eine vorgegebene Aktivierungsentfernung ist;
Auslösen des Ereignisses in der aktivierten Vorrichtung, wenn die berechnete Entfernung zunimmt.

2. Verfahren nach Anspruch 1, wobei die berechnete Entfernung um einen begrenzten Betrag zunehmen kann, ohne das Ereignis auszulösen.

3. Verfahren nach Anspruch 2, wobei der begrenzte Betrag proportional zur berechneten Entfernung ist.

4. Verfahren zur Auslösung eines Ereignisses in einer Vorrichtung, die an einem Fahrzeug angebracht ist oder von Fussgängern mitgeführt werden kann, umfassend:
Berechnen der Position der Vorrichtung;
Berechnen der Entfernung zwischen der berechneten Position und einem vorgegebenen Punkt;
Aktivieren der Vorrichtung, wenn die berechnete Entfernung nicht grösser als eine vorgegebene Aktivierungsentfernung ist;
Auslösen des Ereignisses in der aktivierten Vorrichtung, wenn die berechnete Entfernung zunimmt und gleichzeitig die berechnete Entfernung nicht geringer als die Aktivierungsentfernung ist.

5. Verfahren zur Auslösung eines Ereignisses nach einem der Ansprüche 1 bis 4, wobei das Verfahren ferner das Bestimmen des Werts eines veränderlichen Parameters und das Auslösen des Ereignisses nur dann, wenn der Wert des Parameters mit einem vorgegebenen Wert oder Wertebereich übereinstimmt, umfasst.

6. Verfahren zur Auslösung eines Ereignisses, wobei der veränderliche Parameter Reisedatum, -tag, -zeit, -höhe, -wetter oder -richtung oder Geschwindigkeit der Vorrichtung ist.

7. Vorrichtung, die an einem Fahrzeug angebracht ist oder von Fussgängern mitgeführt werden kann, zur Auslösung eines Ereignisses, umfassend:
Mittel zum Berechnen der Position der Vorrichtung;
Mittel zum Berechnen der Entfernung zwischen der berechneten Position und einem vorgegebenen Punkt;
Mittel zum Aktivieren der Vorrichtung, wenn die berechnete Entfernung nicht grösser als eine vorgegebene Aktivierungsentfernung ist; und
Mittel zum Auslösen des Ereignisses in der aktivierten Vorrichtung, wenn die berechnete Entfernung zunimmt.

8. Vorrichtung nach Anspruch 7, wobei die berechnete Entfernung um einen begrenzten Betrag zunehmen kann, ohne das Ereignis auszulösen.

9. Vorrichtung nach Anspruch 8, wobei der begrenzte Betrag proportional zur berechneten Entfernung ist.

10. Vorrichtung, die an einem Fahrzeug angebracht ist oder von Fussgängern mitgeführt werden kann, zur Auslösung eines Ereignisses, umfassend:
Mittel zum Berechnen der Position der Vorrichtung;
Mittel zum Berechnen der Entfernung zwischen der berechneten Position und einem vorgegebenen Punkt;
Mittel zum Aktivieren der Vorrichtung, wenn die berechnete Entfernung nicht grösser als eine vorgegebene Aktivierungsentfernung ist; und
Mittel zum Auslösen des Ereignisses, wenn die berechnete Entfernung zunimmt und gleichzeitig die berechnete Entfernung nicht geringer als die Aktivierungsentfernung ist.

11. Vorrichtung nach einem der Ansprüche 7 bis 10, ferner umfassend:
Mittel zum Bestimmen des Werts eines veränderlichen Parameters und zum Auslösen des Ereignisses nur dann, wenn der Wert des Parameters mit einem vorgegebenen Wert oder Wertebereich übereinstimmt.

12. Vorrichtung nach Anspruch 11, wobei der veränderliche Parameter Reisedatum, -tag, -zeit, -höhe, -wetter oder -richtung oder Geschwindigkeit der Vorrichtung ist.

## Revendications

1. Procédé de déclenchement d'un événement dans un appareil que l'on monte sur un véhicule ou que des piétons peuvent transporter, le procédé comprenant :
le calcul de la position de l'appareil ;
le calcul de la distance entre la position calculée et un point prédéterminé ;
l'armement de l'appareil lorsque la distance calculée n'est pas supérieure à une distance d'armement prédéterminée ; et
le déclenchement de l'événement dans l'appareil armé lorsque la distance calculée augmente.

2. Procédé selon la revendication 1, dans lequel la distance calculée peut augmenter d'une quantité limitée sans déclencher l'événement.

3. Procédé selon la revendication 2, dans lequel la quantité limitée est proportionnelle à la distance calculée.

4. Procédé de déclenchement d'un événement dans un appareil qui est monté sur un véhicule ou que des piétons peuvent transporter, le procédé comprenant :
le calcul de la position de l'appareil ;
le calcul de la distance entre la position calculée et un point prédéterminé ;
l'armement de l'appareil lorsque la distance calculée n'est pas supérieure à une distance d'armement prédéterminée ;
le déclenchement de l'événement dans l'appareil armé lorsque la distance calculée augmente et en même temps la distance calculée n'est pas inférieure à la distance d'armement.

5. Procédé de déclenchement d'un événement selon l'une des revendications 1 à 4, dans lequel le procédé est constitué de plus de la détermination de la valeur d'un paramètre variable et du déclenchement de l'événement seulement si la valeur du paramètre correspond à une valeur prédéterminée ou à une gamme de valeurs.

6. Procédé de déclenchement d'un événement selon la revendication 5, dans lequel le paramètre variable est une date, un jour, un temps, une altitude, le temps ou une direction de voyage ou la vitesse de l'appareil.

7. Appareil que l'on monte sur un véhicule ou que des piétons peuvent transporter pour déclencher un événement, l'appareil comprenant :
un moyen pour calculer la position de l'appareil ;
un moyen pour calculer la distance entre la position calculée et un point prédéterminé ;
un moyen pour armer l'appareil lorsque la distance calculée n'est pas supérieure à une distance d'armement prédéterminée ; et
un moyen pour déclencher l'événement dans l'appareil armé lorsque la distance calculée augmente.

8. Appareil selon la revendication 7, dans lequel la distance calculée peut augmenter d'une quantité limitée sans déclencher l'événement.

9. Appareil selon la revendication 8, dans lequel la quantité limitée est proportionnelle à la distance calculée.

10. Appareil que l'on monte sur un véhicule ou que des piétons peuvent transporter, pour déclencher un événement, l'appareil comprenant :
un moyen pour calculer la position de l'appareil ;
un moyen pour calculer la distance entre la position calculée et un point prédéterminé ;
un moyen pour armer l'appareil lorsque la distance calculée n'est pas supérieure à une distance d'armement prédéterminée ; et
un moyen pour déclencher l'événement lorsque la distance calculée augmente et en même temps la distance calculée n'est pas inférieure à la distance d'armement.

11. Appareil selon l'une quelconque des revendications 7 à 10, comprenant de plus :
un moyen pour déterminer la valeur d'un paramètre variable et pour déclencher l'événement seulement si la valeur du paramètre correspond à une valeur prédéterminée ou une gamme de valeurs.

12. Appareil selon la revendication 11, dans lequel le paramètre variable est une date, un jour, un temps, une altitude, le temps ou une direction de voyage ou la vitesse de l'appareil.
